# EUROPEAN PATENT APPLICATION

(11) **EP 0 555 620 A1**
(43) Date of publication of application: **18.08.1993**
(21) Application number: 92850289.7
(22) Date of filing: 11.12.1992
(51) Int. Cl.: B23K 20/10, B29C 65/08

(54) **A method and an apparatus for ultrasonic welding of a rounded, all around extending sealing joint**

(30) Priority: 10.02.1992 SE 9200383
(71) Applicant: Akerlund & Rausing Licens Aktiebolag, S-175 26 Järfälla (SE)
(72) Inventor: Herberth, Hans, S-175 71 Järfälla (SE); Berg, Gunnar, S-181 37 Lidingö (SE)
(74) Representative: Avellan-Hultman, Olle

(57) **Abstract**

A method and an apparatus of providing, by an ultrasonic welding process, a liquid and gas proof connection by means of an all around extending plastic welded sealing joint e.g. between an inner lid and an outer container sleeve (15) or any other object having an open end, and which apparatus comprises at least one matrix (17)
for carrying a container sleeve (1), means for forming and introducing a closing part, e.g. a lid (2), having fold up edge rims in an open end of the container sleeve (1), and means (10) for weld connecting the container sleeve (1) and the lid (2), and in which the weld connection means comprises a solid plunge (6) adapted to be placed inside the lid (2) after the lid has been pressed down into the container sleeve (1), at least two but preferably three or four, co-operating, separate ultrasonic weld tools (10) arranged on the exterior side of the container (1), which weld tools (10) enclose the largest portion of the container periphery, and arranged to concurrently with each other and by a predetermined force press the ultrasonic weld tools (10) against the outer surface of the container using the inner solid plunge (6) as a counter die, and means (7-9) for creating ultra sound of a predetermied frequency and a predetermined force in the weld tools (10) in order to establish heat of welding temperature in the common surface between the plastic layers (4), or the plastic materials, of the container sleeve (1) and the lid (2).

## Description

The present invention generally relates to a method and an apparatus for providing an all around extending sealing joint by an ultrasonic welding process, for instance by weld conneting of an inner lid or an inner bottom into a tubular container having a rounded cross section shape or having a polygonal cross section shape with rounded corners.

A method for the manufacture of containers of this type is known from applicant's own Swedish patent having the publication number 451.252. In said method there is made use of a material in the container tube or in the lid or in both, which is a triple laminated material comprising cardboard as a supporting layer, and on said cardboard layer an aluminum layer and a plastic layer. In this case the lid is weld connected interiorly of the container tube by means of a high frequency welding process, whereby the plastic material layer acts as a joining and sealing part, and the aluminum layer acts as a receiver of the high frequency radiation making the metal become heated, and the aluminum layer in turn heating the plastic layer to a welding temperature. The welding is brought about in that the lid is pressed down into an open end of a container tube by means of an expandable plunge, and the said plunge is being expanded at the same time as the high frequency radiation heating is switched on. By this method it is possible to quickly and relatively simply manufacture containers which are "powder proof", "liquid proof" or even "gas proof".

Said known method, however, involves the disadvantage that it is necessary to make use of a triple laminated container material which is both expensive, offers great problems as concerns destruction of used containers, or reuse of of the material of the container. It is therefore a wish to eliminate the aluminum layer of the container material, and in connection thereto to provide a method of liquid proof and gas proof weld joining of container material parts consisting only of plastic or of a cardboard-plastic laminate, for instance by weld connecting a lid to a tubular container.

It is possible to weld conncet material parts by means of so called "constant heating", but such welding operation takes too long time for making it practically possible to utilize said method in modern packaging machines, and in addition thereto the necessary high weld temperature in constant heat welding may damage the content of the container and may cause mis-colouring of the external container surfaces and even ugly-burned damaged parts on the exterior side of the container tube and the lid.

Attempts therefore have been made to make use of ultrasonic radiation for weld joining the container material parts. It is, however, for several reasons not possible to use the same type of technics and equipment for ultrasonic welding as for high frequency welding. For instance, it is necessary in ultrasonic welding processes to buttly and relatively strongly compressing the parts of material to be joined, and it is therefore not possible to make use of an expandable plunge for pressing the edges of the lid against the container sleeve. It is normally also not possible to make use of a welding apparatus of a single piece type, since, oppositely to what is the case in high frequency welding, it is necessary to press the weld jaws radially inwards towards an inner solid plunge, instead of pressing an expandable plunge outwards to a fixed welding tool as in high frequency welding processes.

Normally there are no great problems in ultrasonic welding of pieces of material over only straight joining surfaces since it is thereby possible to use straight ultrasonic jaws and straight counter jaws or any other even counter surface. Such a "straight" welding apparatus is shown for instance in the US patent US 4,671,832.

On the contrary problems appear in case of ultrasonic weldi joining of pieces of material having rounded shapes, in particular ultrasonic welding of an all around extending sealing joint of a container having a rounded, for instance a circular, elliptical or otherwise curved cross section shape, or a container having a substantially polygonal cross section shape with rounded corners.

It has been suggested that the weld joining of a bottom or a lid to a container sleeve by means of ultrasonic radiation should be made by means of an external round, for instance circular ultrasonic probe, into which the container is introduced, and an interiorly in the lid provided separate plunge or oscillatory body having a size which is less than the inner measurements of the lid edges. When the ultrasonic radiation is switched on said separate inner plunge or oscillatory body thereby will "chatter" reciprocatory, and due to such vibrations said plunge will provide a large number of successive point contact compressions of the lid edges to the container tube, and concurrently with said point compressions against the lid edges also point heatings of the common surfaces between the plastic layers or the plastic material parts.

This method, however, does not give a sealing over a tight weld joint, and the method can only be used for the manufacture of containers which only need to be "powder proof", but not for the manufacture of "liquid proof" or "gas proof" containers. In some cases also the "chattering" of the inner plunge may damage the container material of the container tube or the container lid.

The said known method, in practice, also is limited to containers having a circular cross section and not exceeding about 60 mm diameter, or containers having a square cross section with a size of the side of no more than 70-80 mm. In some cases it may eventually be possible to use a twin split oscillatory body or two separate oscillatory bodies in one and the same lid thereby making it possible to ultrasonic joining a square container have a side size of upp to 100-120 mm, but containers larger than this hardly can be made by means of this method. Also in this latter case it is not possible to manufacture containers which are liquid proof and gas proof.

According to the present invention a sealing joint is provided in a container having a completely or partly rounded cross section shape, which sealing joint may be powder proof, or liquid proof, or even gas proof
- in that a solid plunge is provided inside the container or a container lid, which plunge has a cross section shape and a cross section dimension which is substantially the same as the shape and the cross section dimension of the container lid inside the flanges of said container lid,
- and in that several, at least two but preferably three or four, co-operating ultrasonic tools are mounted at the exterior side of the container, which tools are being pressed concurrently and with a predetermined force against the exterior surface of the container and which provide a compression of the container sleeve and the lid flanges at the same time as the ultrasonic radiation is switched on, whereby the common surface of the plastic layers, or the plastic materials in case the container sleeve or the lid is entirely made of plastic, is heated to a welding temperature, and a tight and strong joint is obtained.

Preferably the welding jaws, generally referrred to as "sonotrodes", are pressed to the container sleeve by a pressure of 150-200 kg/cm², whereby the pieces of material are pressed mechanically buttly to each other with the solid jaw as a holding-up tool. This is of importance since otherwise a sufficient heating is not obtained in the common area between the plastic material layers, and the material even may be crushed depending on the vibrations from the ultrasonic energy. The ultrasonic energy can have a frequency of about 20 kHz. Normally a welding period of 0.15 - 0.20 second is quite sufficient. It is important that the separate sonotrodes do not get into mechanical contact with each other during the welding operation and that there is a space between the sonotrodes of for instance 0.3 - 0.4 mm in their fully compressed conditions.

Further characteristics and advantages of the invention will be evident from the following detailed specification, in which reference will be made to the accompanying drawings.

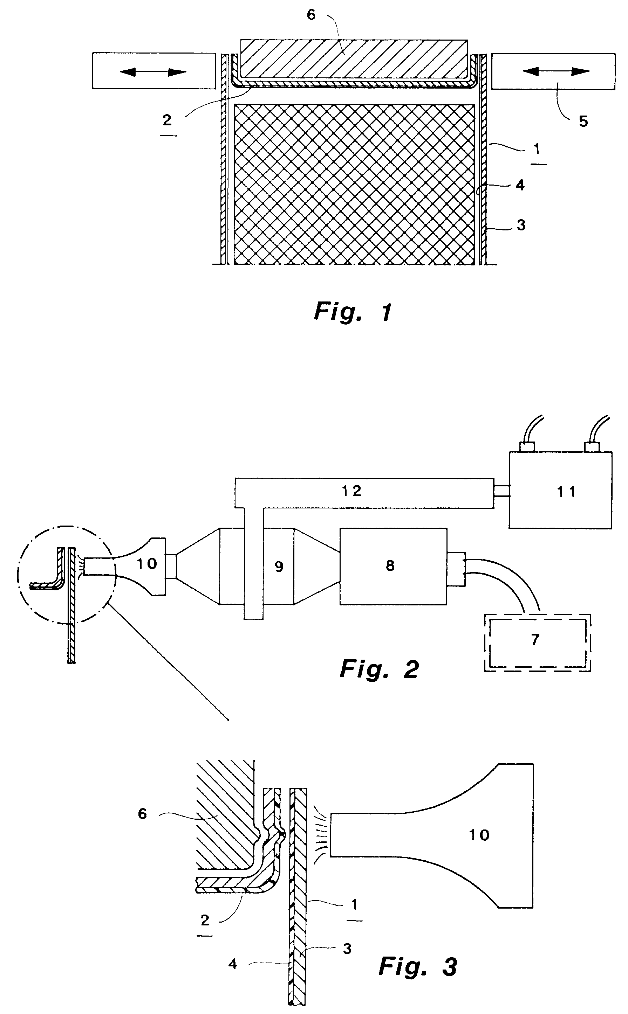

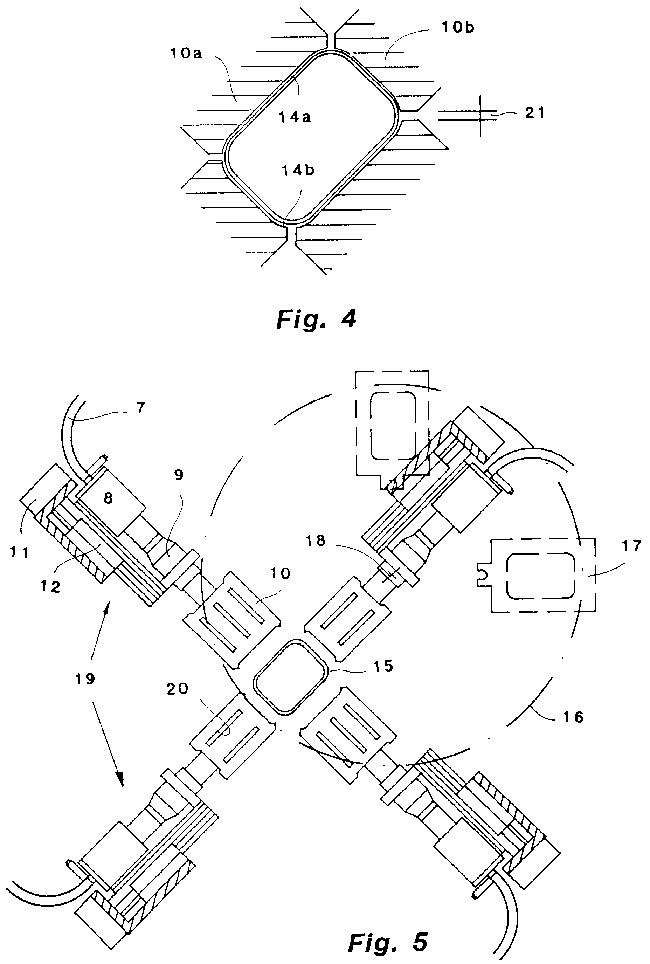

In the drawings figure 1 diagrammatically shows a cross section through a container in which the method and the apparatus according to the invention is applied. Figure 2 shows an ultrasonic welding apparatus suited for use in the invention, and figure 3 shows more in detail the encircled portion of figure 2. Figure 4 shows the situation during ultrasonic welding by means of four co-operating sonotrodes of a rectangular container having rounded corners, and figure 5 shows a top view of a layout of a machine for ultrasonic welding of the container shown in figure 4.

Figure 1 shows an example of a container which can preferably be sealed to be gas proof by means of a lid using the method and the apparatus according to the invention. In the illustrated case it is presupposed that the container has a circular or otherwise completely or partly rounded cross section shape, and the container comprises a container sleeve 1 which is to sealed hermetically by means of a lid 2. Both the container sleeve and the lid are made of a material comprising a base 3 of cardboard, and each of the meeting surfaces has a layer 4 of a weldable plastic of a known and commonly used type. The invention is also useful also for containers which are completely made of a weldable plastic material. The container tube 1 can be made from a plain piece of material which has been shaped to a tube, and the lid 2 is formed with upright rims which are to be weld connected to the inner surface of the container tube 1. Figure 1 diagrammaticaly illustrates that the welding appaatus comprises several welding units 5, referred to as "sonotrodes", two opposed units of which are shown in the drawing. The sonotrodes can be displaced towards and away from the container tube or sleeve 1, and they are arranged to operate concurrently with each other and opposed to each other. The welding apparatus also comprises a solid plunge 6 which has substantially the same shape and size as the lid inside the upright edge rims. The plunge 6 is introduced in the area inside of the upright rims of the lid to act as a holding-up tool for the sonotrodes.

A welding apparatus is shown diagrammatically in figure 2. Said apparatus is electrically operated from a current pulse unit 7 which issues current pulses to a converter 8 which, in turn, transforms said current pulses to high frequency sound vibrations or oscillations. The ultrasonic vibrations formed in the converter 8 are amplified in a sound amplifier 9, generally referred to as a "booster", from which the ultrasonic energy is transmitted to the sonotrode 10 which has a shape which is especially designed for the actual purpose, in particular so that it is converging in the vertical direction for creating a relatively narrow weld joint area between the sleeve 1 and the lid 2. There is a hydraulic of pneumatic force means 11 for moving the sonotrode towards and away from the container sleeve, which force means 11 via a piston-cylinder unit 12 provids a displacement and a resilient pressing of the sonotrode 10 against the container, with the plunge 6 acting as a holding-up tool.

For the sake of clearness the sonotrode 10 is shown slightly spaced from the container in the drawings, but in practice the sonotrode 10 has to be pressed by a relatively strong force directly onto the container side, for instance by a force of 150-200 kg/cm² so as to provide a butt mechanical contact between the plastic layers 4 of the container 1 and the lid 2. In case of a too low pressure force the sound vibrations in the weldable layers may be too low for providing a good weld joint, and in case of a too high pressure furce said sound vibrations in the carboard material may be so strong that the material becomes crushed.

The lid 2 can be pre-shaped to comprise a lid plane and fold up rims, but alternatively the lid can be supplied in the form of a plain disk which is formed with fold up rims by being pressed through a formation ring by the plunge 6. The bore of the formation ring should have the same cross section size and shape as the inner dimension and the inner shape of the sleeve 3. Thereby the plunge 6 presses the lid 2 into an open end of the sleeve 3. For facilitating the press introduction of the lid 2 in the sleeve 3 the lower part of the plunge 6 may be formed as an introduction cone.

It is important that the welding area is under a strong pressure during the welding operation, and for this purpose the plunge 6 may be formed with an all around the plunge extending bead 13 providing an increased contact pressure at the welding area. Said bead both enables promotes the formation of a solid weld joint and also a slight displacement of plastic material and a thickened plastic material area just underneath and just above the welding area, which thickened plastic material ares guarantees and optimum tight, in particular gas tight weld joint.

It is sufficient that the sonotrodes can move a very short distance to and from the container, for instance only a distance of 0.2-0.5 mm. The sonotrodes always are cold during its operation, and what happens during the welding operation is that the ultra sound provides a very strong sound vibration and a subsequent heating of the common area between the two plastic layers 4. Since the actual welding is made as quickly as only within 0.15 second, and since the entire method comprising the press contacting of the sonotrodes, the welding operation, the cooling of the weld joint and the retraction of the sonotrodes only takes about 0.3 second the heat has no possibility of being transmitted to the sonotrodes 10 or to the packed material in the container. The method is so quickly performed that the method is very well suited for modern packaging machines etc.

Figure 4 illustrates, as one of many possible alternatives, a container having a mainly rectangular cross section shape but having rounded corners. Depending on said rounded corners such a container can not be gas proofly weld sealed to the lid by using straight and even weld jaws, and in this case there is made use of four co-operating, partly curved sonotrodes, two sonotrodes 10a for the long sides of the container, and two sonotrodes 10b for the short sides thereof. Each sonotrode has a straight intermediate portion 14a and a curved corner portion 14b, which has a shape which coincides with the shape of the inner plunge and of the container. The rounded portions 14b of the sonotrode extend over an angle of for instance 42-43^{o}. It is important that the sonotrodes can not get into mechanical contact with each other during the welding process, and therefore the sonotrodes preferably are formed so that there is a space 21 of for instance 0.3 mm between the corner portions 14b of adjacent sonotrodes 10a, 10b in their fully compressed conditions.

Figure 5 diagrammatically shows a top view layout of an example of a machine for welding of a (not illustrated) lid into a container cup 15 of the type shown in figure 4. The machine is formed with a so called "carousel" 16 having several, e.g. four dies or matrices 17 for cups 15 and a (not illustrated) apparatus for introducing a lid having fold up rims into an open end of the cup 15. The carousel is rotatable about an axis 18 and it is arranged for stepwise moving container cups into a predetermined position in a stationary mounted welding arrangement comprising four weld units 19, two units for the long sides and two for the short sides of the cup.
The four weld units 19 co-operate and are move exactly concurrently with each other for common weld connecting of the lid in the cup. It is shown in figure 5 that the sonotrodes can be formed with through slots 20, and said slots are adapted to direct the sound waves so as to give as even heating of the weld joint as possible and so as to bridge that the little space 21 between the sonotrodes 10a and 10b which are moved together. The press force of the sonotrodes preferably can be controlled by means of springs between the piston-cylinder unit 12 and the sonotrodes. It should also preferably be foreseen that the sonotrodes are resiliently pressed to the container, so that the press force is being maintained even if the base material of the container is slightly compressed and even when the plastic layers 4 are eventually melded away.

By forming the weld arrangement with several external, separate but co-operating sonotrodes operating concurrently against a solid inner plunge as described above it is possible to ultrasonic welding nearly unlimited large containers or other objects having completely or partly rounded cross section shapes.

### Reference numerals

- 1: container sleeve
- 2: lid
- 3: carboard material
- 4: plastic material
- 5: weld unit
- 6: plunge
- 7: current supply unit
- 8: converter
- 9: sound amplifier
- 10: sonotrode
- 11: power source
- 12: piston-cylinder unit
- 13: bead (of 6)
- 14a: straight portion (of 10)
- 14b: corner portion (of 10)
- 15: cup
- 16: carousel
- 17: matrix (die)
- 18: axis
- 19: weld unit
- 20: slot (of 10)
- 21: space

## Claims

1. Method of providing, by an ultrasonic welding process, a liquid and gas proof connection by means of an all around extending sealing joint of a container or any other object having a rounded cross section shape or a polygonal cross section shape with rounded corners, e.g. in weld connecting an inner lid (2) or bottom having fold up rims interiorly of a container sleeve (1) etc., whereby one of the parts, or both parts (1, 2) to be weld connected to each other has/have a layer of a weldable plastic material, or whereby one of, or both parts is/are entirely made of a weldable plastic material, **characterized**
in placing a solid plunge (6) in between the flanges of a lid (2) which has been pressed into a container sleeve (1), which plunge (6) has a cross section shape and size which is substantially the same as the cross section shape and size of the lid inside the lid flanges,
in providing, on the outer side of the container (1), several, at least two but preferably three or four, co-operating, separate ultrasonic welding tools (5) which enclose the largest portion of the periphery of the container,
and concurrently therewith pressing said ultrasonic welding tools (5) by a predetermined force against the outer side of the container (1) so as to provide a compression of the container sleeve (1) and the lid flanges (2) with the inner solid plunge (6) as a counter die,
and further concurrently therewith connecting the ultrasonic energy, whereby the common surface between the plastic layers (4), or the plastic materials, of the container sleeve (1) and the lid (2) are being heated to welding temperature thereby providing a sealed joint.

2. Method according to claim 1, **characterized** in pressing the welding yaws, generally referred to as "sonotrodes" (10), against the container sleeve (1) by a resilient pressure of 150-200 kg/cm², whereby the pieces of material are mechanically pressed buttly to each other.

3. Method according to claim 1 or 2, **characterized** in giving the ultra sound emitted by the sonotrodes (10) a frequency of about 20 kHz and such a power that the effective welding time is 0.15-0.20 second, and so that the entire welding process including pressing the sonotrodes (10) against the container (1) , performing the welding operation, cooling the weld joint and retracting the sonotrodes (10) to a retracted position takes about 0.3 second.

4. Method according to claim 1, 2 or 3, **characterized** in bringing the sonotrodes (10) to operate exactly concurrently with each other and in opposite directions, and arranging said sonotrodes (10) so as not to get any mechanical contact with each other in their fully compressed conditions, preferably so that the sonotrodes (10) present a space between each other of about 0.3-0.4 mm.

5. Apparatus for executing the method according to any of the preceding claims in providing, by an ultrasonic welding process, a liquid and gas proof joint over an all around extending sealing joint of a container or any other object having a rounded cross section shape or a polygonal cross section shape with rounded corners, e.g. in weld connecting an inner lid (2) or bottom having fold up edge rims to a container sleeve (1) etc., whereby one of the parts or both parts (1, 2) to be weld connected has/have a layer of a weldable plastic material, or one of or both parts is/are entirely made of a weldable plastic material, which apparatus comprises at least one matrix (17) for carrying a container sleeve (1), means for forming and introducing a closing part, e.g. a lid (2), having fold up edge rims in an open end of the container sleeve (1), and means (10) for weld connecting the container sleeve (1) and the lid (2), **characterized** in that the weld connection means comprises
a solid plunge (6) adapted to be placed inside the lid (2) after the lid has been pressed down into the container sleeve (1), which plunge (6) has a cross section shape and size which are substantially the same as the cross section shape and size of the container lid (2) interiorly of the lid flanges,
several, at least two but preferably three or four, co-operating, separate ultrasonic weld tools (10) arranged on the exterior side of the container (1), which weld tools (10) enclose the largest portion of the container periphery,
means for, concurrently with each other and by a predetermined force, press the ultrasonic weld tools (10) against the outer surface of the container so as to provide a compression of the container sleeve (1) and the lid flanges (2) using the inner solid plunge (6) as a counter die,
and means (7-9) for creating ultra sound of a predetermied frequency and a predetermined force in the weld tools (10) in order to establish heat of welding temperature in the common surface between the plastic layers (4), or the plastic materials, of the container sleeve (1) and the lid (2).

6. Apparatus according to claim 5, **characterized** in that the weld tools, generally referred to as sonotrodes (10) are arranged for being pressed to the container sleeve (1) by a resilient pressure of 150-200 kg/cm², whereby the pieces of material to be weld connected are being pressed buttly against each other.

7. Apparatus according to claim 5 or 6, **characterized** in that the ultra sound of the sonotrodes (10) is of a frequency of about 20 kHz and of such a power that the effective welding time normally is 0.15-0.20 second, and so that the entire weilding process including pressing the sonotrodes (10) against the container (1) performing the welding operation, cooling the weld joint, and retracting the sonotrodes to their retracted positions, takes about 0.3 second.

8. Apparatus according to any of claims 5-7, **characterized** in that the sonotrodes (10) are arranged to operate exactly concurrently with each other and in opposite directions, and in that the sonotrodes are mounted so that there is no mutual mechanical contact between the sonotrodes (10) when they are fully pressed against the container, preferably so that there is a space of about 0.3-0.4 mm between adjacent sonotrodes (10).

9. Apparatus according to any of claims 5-8, **characterized** in that the weld tools or sonotrodes (10) are formed so that some part of each sonotrode (10) encloses a rounded portion of the container sleeve (1), and in that adjacent sonotrodes (10) are facing each other at a rounded portion of the container over a space of about 0.3-0.4 mm.

10. Apparatus according to any of claims 5-9, **characterized** in that the solid inner plunge (6), which is used as a counter die, is formed with an all around the plunge extending, projecting bead (13), and in that the plunge (6) is formed with a conical or in any other way formed front (or bottom) portion for facilitating the introduction of a lid (2) or any other object into the inner of an open container sleeve end (1).
